# EUROPÄISCHE PATENTANMELDUNG

(11) **EP 0 984 211 A2**
(43) Veröffentlichungstag der Anmeldung: **08.03.2000**
(21) Anmeldenummer: 99890244.9
(22) Anmeldetag: 21.07.1999
(51) Int. Cl.: F16H 61/30

(54) **Vorrichtung zur Unterstützung der Drehbewegung einer Welle**

(30) Priorität: 26.08.1998 AT 144898
(71) Anmelder: HYGRAMA AG, CH-6343 Rotkreuz (CH)
(72) Erfinder: Dörfler, Erich, Dipl.-Ing., 86925 Leeder (DE)
(74) Vertreter: Laminger, Norbert, Mag.

(57) **Zusammenfassung**

Eine Vorrichtung zur Unterstützung der Drehbewegung einer Welle, insbesondere zur Schaltunterstützung für manuelle Getriebe, insbesondere für Zahnradwechselgetriebe von Kraftfahrzeugen, speziell von Nutzfahrzeugen, weist einen manuell zu betätigenden Schalthebel (S) auf, der mittelbar auf die Welle und insbesondere über eine mit zumindest einem Schaltfinger versehene Drehwelle mittelbar auf Schaltgabeln im Wechselgetriebe einwirkt, weiters zumindest einen druckmittelbetätigten Arbeitszylinder (14, 15, 31), der auf das Schaltgestänge unterstützend einwirkt, und zumindest eine Einrichtung zur Ermittlung der Betätigung des Schalthebels, die den Arbeitszylinder ansteuert. Um eine baulich nicht aufwendige Schaltunterstützungsvorrichtung zu schaffen, die bei möglichst guter Charakteristik im Betrieb auch den Notbetrieb nicht beeinträchtigt und die vorzugsweise auch für die Nachrüstung bestehender Systeme geeignet ist, ist die Drehwelle (9) an einer Stelle (12) ortsfest und an einer zweiten Stelle (18) in Richtung der Schaltbewegung beweglich gelagert, und ist als Einrichtung zur Ermittlung der Betätigung des Schalthebels zumindest ein schaltbares Steuerventil (16, 17) für den Arbeitszylinder (14, 15, 31) vorgesehen, das bei Verschwenkung der Drehwelle (9) durch diese betätigbar ist.

## Beschreibung

Die Erfindung betrifft eine Vorrichtung zur Unterstützung der Drehbewegung einer Welle, insbesondere zur Schaltunterstützung für manuelle Getriebe, insbesondere für Zahnradwechselgetriebe von Kraftfahrzeugen, speziell von Nutzfahrzeugen, mit einem manuell zu betätigenden Schalthebel, der mittelbar auf die Welle und insbesondere über eine mit zumindest einem Schaltfinger versehene Drehwelle mittelbar auf Schaltgabeln im Wechselgetriebe einwirkt, zumindest einem druckmittelbetätigten Arbeitszylinder, der auf das Schaltgestänge unterstützend einwirkt, und zumindest einer Einrichtung zur Ermittlung der Betätigung des Schalthebels, die den Arbeitszylinder ansteuert.

Eine spezielle Anwendung, bei der die Drehbewegung einer manuell betätigten Welle durch zusätzliche Hilfsmittel unterstützt wird, ist die Schaltunterstützung für Getriebe, beispielsweise in Nutzfahrzeugen. Für die Schaltunterstützung manuell geschalteter Getriebe gibt es mehrere bekannte Lösungen. Meist ist die Schaltunterstützung fest mit dem Getriebe verbunden und die Trennung von Dreh- und Querbewegung wird durch Nutensteine, Hohl- und Keilwellen od. dgl. erreicht. Ein erster Hebel im Gehäuseinneren leitet die Kräfte auf das Ventil und ein anderer Hebel leitet daraufhin die erzeugte Kraft des Servozylinders in das Getriebe. Bei einer anderen bekannten Ausführungsform wird das Schaltgestänge direkt auf das Ventil geleitet und die Entkoppelung zwischen Dreh- und Querbewegung erfolgt erst anschliessend. Über ein Schiebemuffe und einen zusätzlichen Hebel wird die Querbewegung übertragen.

Bei der relativ aufwendigen Schaltvorrichtung der W097/15768 ist der Schalthebel über ein Gestänge mit einer Steuerstange in der Kolbenstange eines Servozylinders verbunden, der die Schaltkräfte proportional verstärkt in das Getriebe überträgt. Durch unterschiedliche Ventilkennlinien und/oder unterschiedliche geometrische Abmessungen der Oberflächen des Kolbens im Servozylinder können unterschiedliche Schaltkräfte erzielt werden.

Bei der Getriebeschaltvorrichtung der EP 0 809 048 ist der Schalthebel über einen Kabelzug mit dem Getriebehebel verbunden, welcher über einen doppeltwirkenden Arbeitszylinder betätigt wird. Für den Schaltvorgang werden die Kräfte auf den Schalthebel und Motor- sowie Kupplungsdaten berücksichtigt und beeinflussen die Ansteuerung des Arbeitszylinders.

In der DE-0S 29 27 666 ist eine Schaltunterstützung beschrieben, bei der eine relative Verdrehung von Schalthebel und Drehwelle über einen inneren Hebelarm auf eine Ventilanordnung übertragen wird, welche dann den Servozylinder ansteuert. Die Drehwelle selbst bleibt aber ortsfest gelagert.

Auch bei der EP-A-0 251 807 wird aus dem Unterschied zwischen der Bewegung des Schalthebels und der Bewegung der Drehwelle eine Betätigungsbewegung eines Steuerventils abgeleitet, die dann zur Ansteuerung eines Servozylinders zur Ausführung der Schaltbewegung genutzt wird.

Bei der Anordnung der DE-0S 1 625 145 und der vom Schaltprinzip her gleichartigen US-PS 3,628,403 wird die Bewegung eines Schalthebels in Schaltrichtung zur Betätigung eines Steuerventils genutzt, die bei einem elastisch gelagerten Schalthebel bei zu hohen Schaltkräften und dadurch fehlender Drehbewegung der ortsfest gelagerten Drehwelle erfolgt.

Die US-PS 2,926,539 hat eine Schaltvorrichtung zum Gegenstand, bei der die Bewegung des Schalthebels über eine Welle in eine Betätigungbewegung eines Steuerventils umgesetzt wird. Das Steuerventil steuert dann einen Aktuator an, welcher die Schaltbewegung einer wiederum insgesamt ortsfesten zweiten Drehwelle bewirkt.

Ähnlich funktioniert auch die Schaltvorrichtung der US-PSen 3,035,102 und 3,074,291, bei welchen die Schaltbewegung des Schalthebels zur Betätigung von Schaltventilen führt, welche dann Schaltaktuatoren zur Verdrehung der eigentlichen und wiederum vollständig ortsfesten Drehwelle ansteuern.

Das Ziel der vorliegenden Erfindung war eine baulich nicht aufwendige Unterstützungsvorrichtung, insbesondere für die Schaltunterstützung von Wechselgetrieben, die bei möglichst guter Charakteristik im Betrieb auch den Notbetrieb, d.h. bei Getrieben die Notschaltbarkeit, bei Ausfall nicht beeinträchtigt und die vorzugsweise auch für die Nachrüstung bestehender System und Getriebe geeignet ist.

Dieses Ziel wird erfindungsgemäß dadurch erreicht, daß die Drehwelle an einer Stelle ortsfest und an einer zweiten Stelle in Richtung der Schaltbewegung beweglich gelagert ist, und daß als Einrichtung zur Ermittlung der Betätigung des Schalthebels zumindest ein schaltbares Steuerventil für den Arbeitszylinder vorgesehen ist, das bei Verschwenkung der Drehwelle durch diese betätigbar ist. Jede Betätigung des Schalthebels führt zu einer Verschwenkung der Drehwelle um ihren ortsfest gelagerten Abschnitt und der verschwenkte Abschnitt kann, allenfalls mittelbar über Zwischenstücke, das Absperrelement des Steuerventils für den unterstützenden Arbeitszylinder betätigen. Ohne aufwendige Sensoren oder ähnliche elektronische Vorrichtungen wird damit einfach, automatisch und weitestgehend gesichert gegen Ausfälle und Fehlfunktionen eine Schaltbewegung zur Betätigung des diese Schaltbewegung unterstützenden Arbeitszylinders genutzt. Damit ergibt sich bei einfacher Veränderung des Systems durch reine Verlängerung der Drehwelle und Anbau der Ventile im Bereich des die Bewegung zulassenden Auflagers, beispielsweise in Form eines Langloches, eine Konstruktion mit nur einer Schnittstelle zum Schalthebel und eine im wesentlichen lineare Verstärkung der Schaltkräfte auf den Schalthebel. Durch den Anbau ohne Veränderung oder Modifikation des Schaltgestänges von Schalthebel bis Schaltausleger ist die Nachrüstung auch bestehender Getriebe in einfacher Weise möglich. Sollte das System trotz allem ausfallen, bleibt der Kraftfluß zwischen Schalthebel und Mitnehmerfinger unverändert und gewährleistet so die sichere Notschaltbarkeit des Getriebes.

Vorzugsweise ist für die Schaltunterstützung sowohl des Hoch- als auch Zurückschaltens vorgesehen, daß zwei Steuerventile symmetrisch zur Drehwelle und in einer Linie, parallel und vorzugsweise im Fall der Steuerventile, koaxial mit der Linie der Schwenkbewegung der Drehwelle vorgesehen sind. Damit kann die Drehwelle bei ihrer Verschwenkung unmittelbar in beiden Schaltrichtungen auf die Steuerventile einwirken.

Wenn die Drehwelle auf der der ortsfesten Lagerung gegenüberliegenden Seite eines Mitnehmerfingers in Richtung der Schaltbewegung beweglich gelagert ist, ergibt sich die bestmögliche Anordnung zur Betätigung der Ventile bei Verschwenkung der Querwelle bei gleichzeitig geringstmöglicher Veränderung der bestehenden Schaltgestänge, so daß die Nachrüstung bestehender Getriebe besonders einfach ist.

Bei Systemen mit einem drehfest auf der Drehwelle montierten Servohebel, an welchem zumindest ein Arbeitszylinder angreift, und bei welchen die Drehwelle auch axial verschiebbar ist, ist vorteilhafterweise der Servohebel um eine senkrecht zur Achse der Drehwelle verlaufende Achse verschwenkbar, während die Arbeitszylinder ortsfest angebracht sind. Je nach der gewählten Schaltgasse, welche einer bestimmten axialen Verschiebung der Drehwelle entspricht, verändert sich der Winkel der Servohebels zur Achse der Drehwelle, damit auch seine wirksame Länge und somit das vom Arbeitszylinder ausgeübte Drehmoment. Damit kann die Unterstützung der Schaltbewegung einfach an die für den Wechsel unterschiedlicher Gänge unterschiedlichen Kräfte angepaßt werden.

Eine baulich einfache und für die Nachrüstung bestehender Getriebe günstige Anordnung ergibt sich, wenn der Servohebel und der oder jeder Arbeitszylinder auf der dem Mitnehmerfinger und der ortsfesten Lagerung gegenüberliegenden Seite des beweglichen Lagerung der Drehwelle angeordnet ist. Hier sind diese Teile entfernt von der Anbindung an das Schaltgestänge und auch das Wechsel getriebe selbst besonders leicht für Wartung, Reparatur und Austausch zugänglich.

Die weitere Ausführungsform, bei welcher gemäß einem weiteren Merkmal der Erfindung die Steuerventile oder die Arbeitszylinder und ein allfälliger Servohebel, vorzugsweise alle genannten Bauteile, zwischen dem Mitnehmerfinger und der beweglichen Lagerung der Drehwelle vorgesehen sind, erlaubt eine sehr kompakte und klein dimensionierbare Ausführung der erfindungsgemäßen Dreh- bzw. Schaltunterstützung.

Speziell für Nutzfahrzeuge ist die einfache Anbindung an deren ohnehin vorhandenes Druckluftsystem möglich, wenn pneumatische Arbeitszylinder vorgesehen sind.

Um dabei aber die Bewegung um das bewegliche Auflager so gering wie möglich zu halten, sind erfindungsgemäß pneumatische Sitzventile mit geringem Hub zur Ansteuerung des oder jedes Arbeitszylinders vorgesehen, welche über ein elastisches Element, vorzugsweise eine Schraubenfeder, geschlossen gehalten sind und wobei weitere elastische Elemente, vorzugsweise Schraubenfedern, die Drehwelle in ihrer neutralen Stellung halten. Damit ist, insbesondere bei zwei einander gegenüberliegenden Ventilen, die Drehwelle in der neutralen Stellung, bei der der Schalthebel nicht betätigt ist, zwischen den Betätigungselementen der Ventile zentriert und schwingungsgedämpft gehalten.

Um aufwendige Dichtstellen möglichst zu verringern, den baulichen Aufwand gering zu halten und die Bauteile gegen Verschmutzung zu schützen, sind vorteilhafterweise das oder jedes Steuerventil, vorzugsweise auch der oder jeder Arbeitszylinder, in einem gemeinsamen Gehäuse angeordnet, welches auch das Lager für die in Richtung der Schaltbewegung verschwenkbare Lagerung der Drehwelle beinhaltet und vorzugsweise mit dem auf dem Getriebegehäuse aufgeflanschten Schaltauslegergehäuse verbunden ist.

Um zusätzlich zu den oben genannen Vorteilen auch jene der hydraulischer Übertragung der Schaltbewegung vom Schalthebel zum Getriebe nutzen zu können, ist gemäß einem weiteren Merkmal der Erfindung vorgesehen, daß ein Schaltzylinder, vorzugsweise ein hydraulischer Arbeitszylinder, eines hydraulischen Schaltsystems parallel zu dem oder jedem Arbeitszylinder auf die Drehwelle einwirkt.

Vorteilhafterweise ist dabei vorgesehen, daß zusätzlich ein weiterer Schaltzylinder, vorzugsweise ein hydraulischer Arbeitszylinder, des hydraulischen Schaltsystems axial auf die Drehwelle einwirkt.

In baulich einfacher und auch für die Krafteinleitung optimaler Weise ist bei einer bevorzugten Ausführungsform der Schaltzylinder des hydraulischen Schaltsystems mit dem Kolben zumindest eines Arbeitszylinders verbunden.

Selbstverständlich kann mit weniger aufwendigerer Bauweise auch das mechanische Schaltgestänge am Kolben zumindest eines Arbeitszylinders angreifen.

In der nachfolgenden Beschreibung soll ein bevorzugtes Ausführungsbeispiel der Erfindung in der Anwendung für ein manuelles Schaltgetriebe anhand der beigefügten Zeichnungen näher erläutert werden. Dabei zeigt die Fig. 1 eine perspektivische Ansicht eines Getriebes mit aufgeflanschter Vorrichtung zur Schaltunterstützung, Fig. 2 zeigt diese Vorrichtung in vergrößertem Maßstab, Fig. 3 ist eine schematische perspektivische Ansicht des Innenaufbaus der Vorrichtung und der Verbindung mit dem Schaltgestänge, Fig. 4 zeigt eine vergrößerte Darstellung des Endes der Drehwelle in einer bevorzugten Ausführungsform mit beweglichem Servohebel, Fig. 5 zeigt einen Querschnitt durch das bewegliche Auflager der Drehwelle, welches mit zwei symmetrischen Ventilen für den Arbeitszylinder der Schaltunterstützung versehen ist, Fig. 6 ist eine schematische Darstellung des Innenaufbaus einer weiteren Ausführungsform, und Fig. 7 ist eine schematische Darstellung des Innenaufbaus einer weiteren Ausführungsform mit hydraulischer Schaltübertragung.

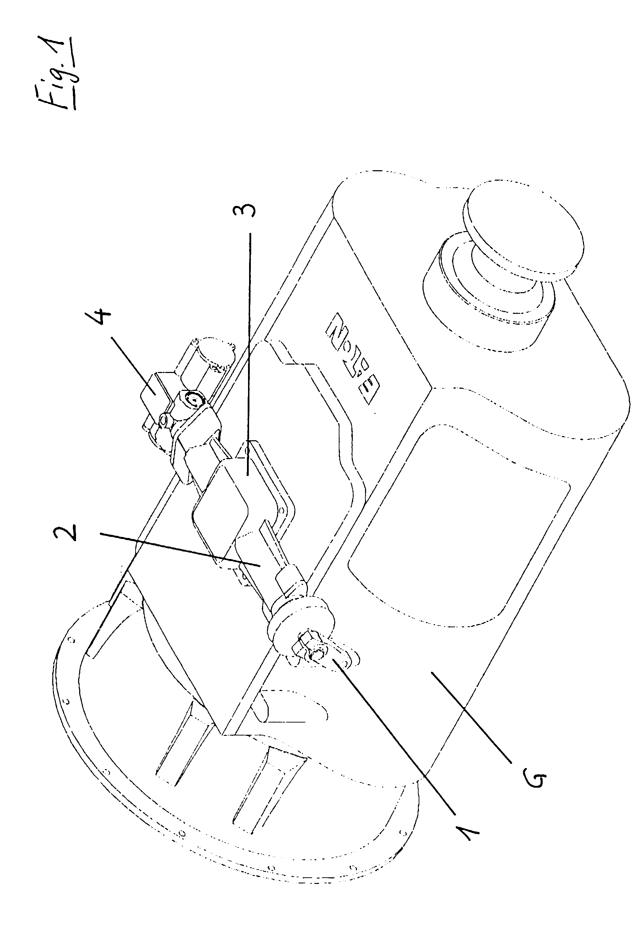

Eine erfindungsgemäße Vorrichtung zur Schaltunterstützung für jede Art von manuell betätigten Wechselgetrieben, speziell für Zahnradwechselgetriebe für den Einsatz in stationären Anlagen und vorzugsweise in Kraftfahrzeugen, insbesondere in Nutzfahrzeugen, ist in Fig. 1 in einer bevorzugten Ausführungsform auf ein herkömmliches Getriebe G aufgeflanscht dargestellt. Natürlich kann die erfindungsgemäße Vorrichtung auch, neben der dargestellten und besonders für die Nachrüstung bereits bestehender Getriebe, auch baulich in das Getriebe integriert werden.

Die Krafteinleitung vom (in Fig. 1 nicht dargestellten) Schalthebel erfolgt über den äußeren Getriebehebel 1, der drehfest an der im Gehäuse 2 verlaufenden Drehwelle angebracht ist und auch deren Verschiebung in axialer Richtung, je nach mit dem Schalthebel gewählter Schaltgasse, ermöglicht. Die Verbindung mit dem Gehäuse des Getriebes G erfolgt vorteilhafterweise im Bereich des Schaltauslegergehäuses 3. Die eigentlich funktionellen Bauteile der erfindungsgemäßen Vorrichtung, nämlich die zweite Lagerung der Drehwelle, der die Schaltbewegung unterstützende Arbeitszylinder und dessen Steuerventile befinden sich vorteilhafterweise in einem Gehäuse 4 auf der dem Getriebehebel 1 gegenüberliegenden Seite des Schaltauslegergehäuses 3.

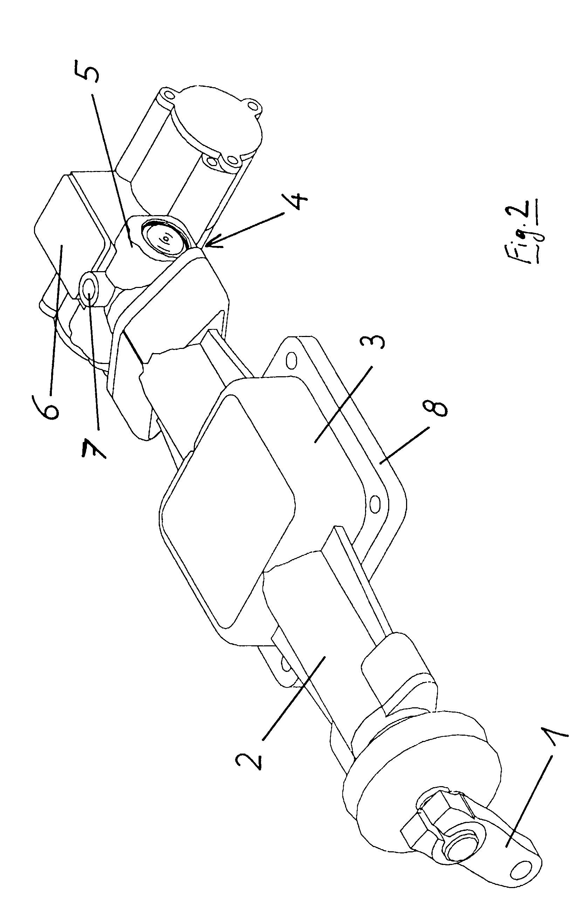

In der Darstellung mit vergrößertem Maßstab der Fig. 2 ist zu erkennen, daß das Gehäuse 4 unterteilt ist, wobei symmetrisch zur Drehwelle und koaxial die beiden Ventilgehäuse 5 für die Steuerventile vorgesehen sind, denen als Arbeitsfluid für den im Zylindergehäuse 6 untergebrachten Arbeitszylinder vorzugsweise Druckluft über einen Anschluß 7 zugeführt werden kann. Am Schaltauslegergehäuse 3 ist noch der Befestigungsflansch 8 mit den Bohrungen für die Befestigungsschrauben zu erkennen.

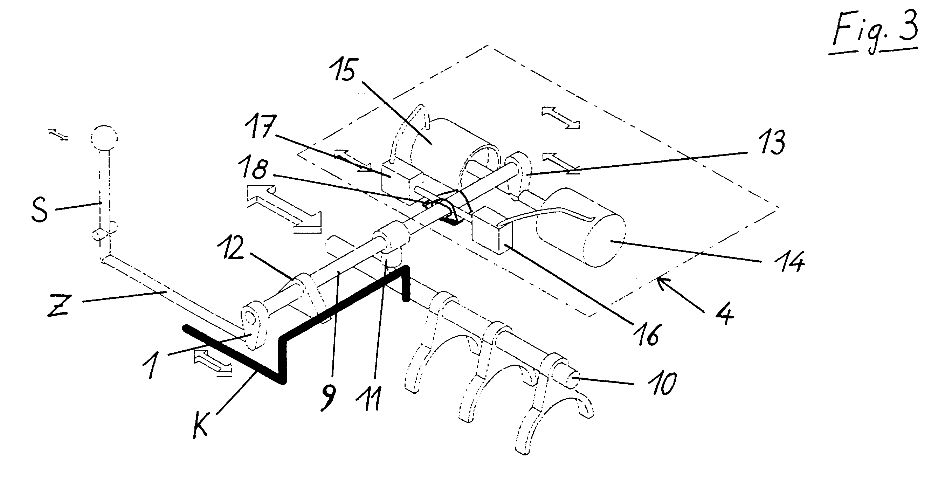

Der innere Aufbau der erfindungsgemäßen Vorrichtung ist schematisch in Fig. 3 dargestellt, ebenso wie die Anbindung an den Schalthebel S über ein dazwischenliegendes, hier beispielhaft aus nur einem geraden Abschnitt bestehendes Schaltgestänge Z, das am äußeren Getriebehebel 1 angreift. Dieser Getriebehebel 1 verdreht eine im wesentlichen quer zur Bewegung des Schalthebels S bei Einlegen der Gänge angeordnete Drehwelle 9. Diese Drehwelle 9 ist zwischen dem Getriebehebel 1 und einem auf den Träger 10 der Schaltgabeln des Wechselgetriebes einwirkenden Mitnehmerfinger 11 in einem ersten Lager 12 ortsfest aber drehbar und vorzugsweise auch axial verschiebbar gelagert. Typischerweise liegt die Drehwelle 9 quer zur Längsachse des Getriebes, sodaß eine axiale Verschiebung dieser Drehwelle 9 eine Verschiebung quer zum Getriebe und dessen Gehäuse G ist. Der Mitnehmerfinger 11 ist auf der Drehwelle 9 drehfest montiert. Mit K ist der Verlauf des Kraftflusses vom Schalthebel S zum Träger 10 der Schaltgabeln bezeichnet.

Auf der dem ersten Lager 12 und dem äußeren Getriebehebel 1 gegenüberliegenden Seite des Mitnehmerfingers 11 ist die Drehwelle 9 weitergeführt und ist im Bereich ihres Endes mit einem Servohebel 13 versehen. An diesem Servohebel 13, der wieder drehfest mit der Drehwelle 9 verbunden ist, greifen im Beispiel der Fig. 3 zwei einfachwirkende Arbeitszylinder 14, 15 an, vorzugsweise Pneumatikzylinder mit Druckluft als Arbeitsfluid. Angesteuert werden dies Arbeitszylinder 14 und 15, welche das Einlegen der Gänge unterstützen, durch zwei zugeordnete Steuerventile 16 und 17, beispielsweise herkömmliche Sitzventile. Zu deren Betätigung in Abhängigkeit von der Bewegung des Schalthebels S zum Einlegen der Gänge ist die Drehwelle 9 an einer vom ersten Lager 12 beabstandeten Stelle, vorzugsweise unmittelbar bei den Steuerventilen 16, 17, in einem zweiten Lager 18 einer Weise gelagert, daß sie in Richtung und in der Ebene der Schaltbewegung, d.h. der Richtung des Pfeils V, verschwenkt werden kann. Dies kann beispielsweise durch ein quer zur Drehwelle 9 und parallel zur Verbindungslinie orientiertes Langloch realisiert sein. Durch diese Schwenkbewegung kann die Drehwelle 9 unmittelbar oder mittelbar über Zwischenstücke wie Hebelanordnungen, Stössel od. dgl. auf die Absperrelemente der Steuerventile 16, 17 einwirken und somit die Ansteuerung der unterstützenden Arbeitszylinder 14 und 15 bewirken.

Der Servohebel 13, die Arbeitszylinder 14 und 15 und deren Steuerventile 16 und 17 sind, wie dies durch die strichpunktierte Linie symbolisiert ist, vorzugsweise in einem gemeinsamen Gehäuse 4 angeordnet, das vorzugsweise mit dem Schaltauslegergehäuse 3 verbunden ist.

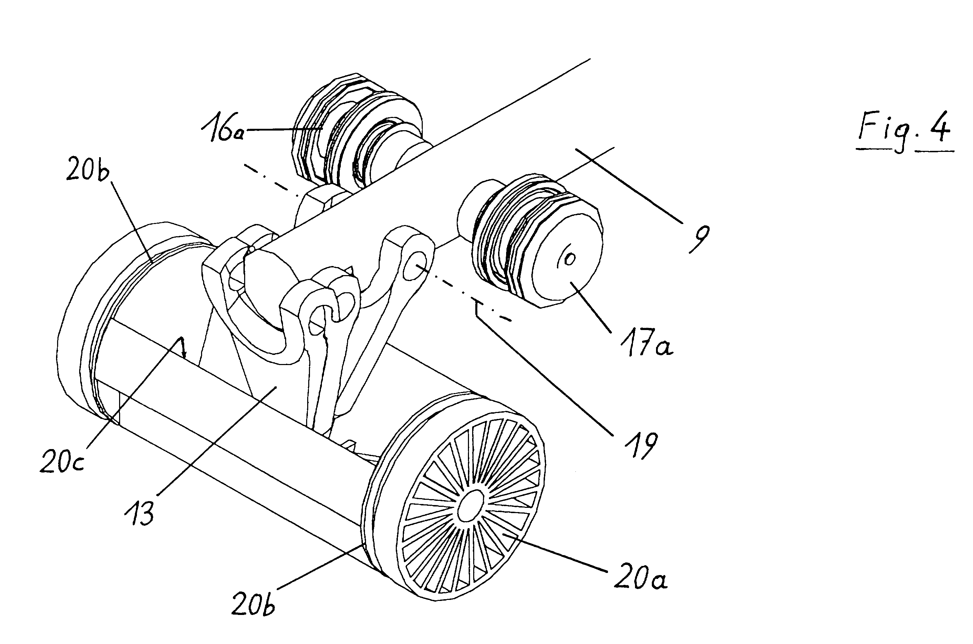

In beiden Lagern 12 und 18 ist die Drehwelle 9 aber auch vorzugsweise axial verschiebbar, um bei entsprechender Bewegung des Schalthebels S zur Wahl unterschiedlicher, parallel nebeneinanderliegender Schaltgassen, diese Bewegung auch der Drehachse 9 mitteilen zu lassen. Nachdem die zum Einlegen der Gänge notwendige Kraft meist abhängig von der gewählten Schaltgasse ist, ist es von Vorteil, wenn die unterstützende Kraft der Arbeitszylinder auf diese unterschiedlichen Betätigungskräfte abgestimmt werden kann. Dazu ist vorteilhafterweise vorgesehen, daß der Servohebel 13, wie in Fig. 4 dargestellt ist, drehfest, aber um eine quer zur Drehwelle 9 verlaufende Achse 19 verschwenkbar, an der Drehwelle 9 montiert ist. Je nach dem Ausmaß der axialen Verschiebung der Drehwelle 9, d.h. je nach mit dem Schalthebel S gewählter Schaltgasse, weist der Servohebel 13 dann eine andere wirksame Länge auf, so daß bei gleichbleibender Kraft der Arbeitszylinder die Kraft zur Schaltunterstützung unterschiedlich ist. Natürlich kann der Servohebel 13 aber auch mit immer dem selben Winkel zur Achse der Drehwelle 9 auf dieser montiert sein, wobei zur Ermöglichung der axialen Verschiebung dieser Drehwelle 9 sie durch eine Bohrung des Servohebels 13 hindurchgeführt ist. Die Verhinderung der gegenseitigen Verdrehung wird dabei beispielsweise über eine Nut-Zapfen-Anordnung bewerkstelligt, wobei vorzugsweise zumindest eine axiale Längsnut in der Drehwelle 9 und eine der Anzahl der Nuten entsprechende Anzahl von in diese Nuten eingreifenden Zapfen in der Bohrung des Servohebels 13 herausgearbeitet sind.

In Fig. 4 ist aber auch noch zu erkennen, daß selbstverständlich anstelle von zwei einfachwirkenden Arbeitszylindern 14, 15 auch ein doppeltwirkender Arbeitszylinder vorgesehen sein kann, von dem in Fig. 4 nur der Kolben 20 mit seinen druckbeaufschlagten Flächen 20a, den Kolbendichtungen und Führungsringen 20b und der Führungsbahn 20c für den mit vorzugsweise einem kugelförmig ausgeführten Ende versehenen Servohebel 13 dargestellt ist. Von den Steuerventilen 16 und 17 für den doppelwirkenden Arbeitszylinder sind auch nur die eigentlichen Ventilelemente 16a und 17a ohne das umgebende Gehäuse dargestellt.

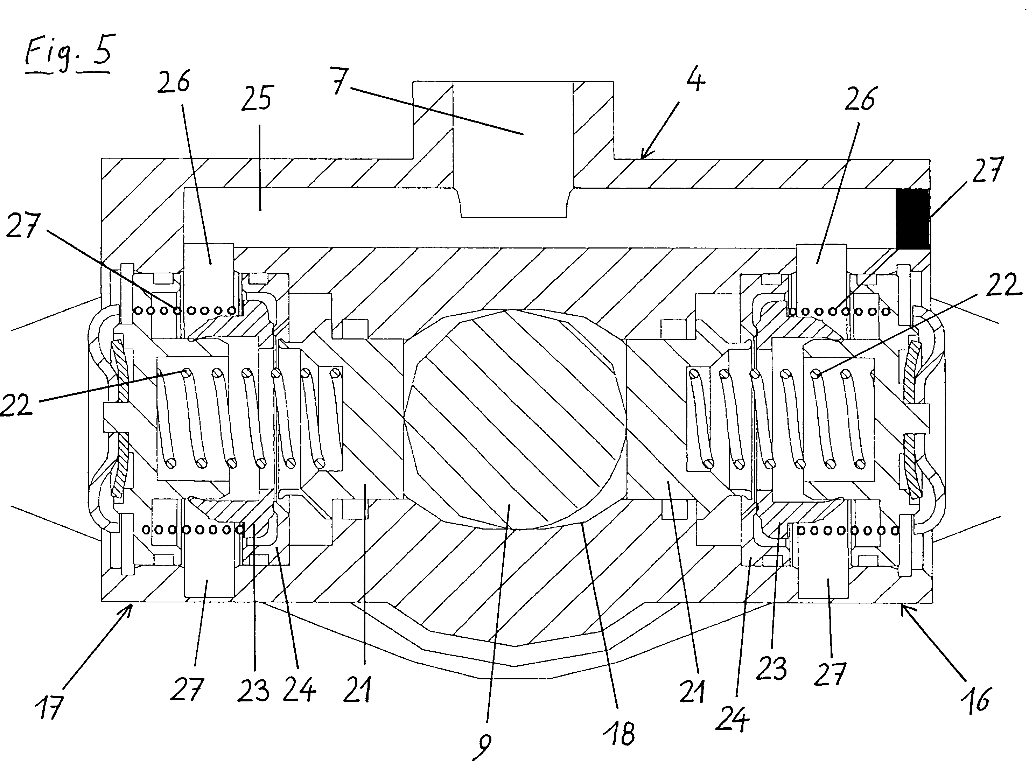

Im Querschnitt der Fig. 5 ist eine bevorzugte Ausführungsform für das die Verschwenkung der Drehwelle 9 gestattende Lager in Form eines Langloches 18 im Gehäuse 4 dargestellt, in welchem sich auch die Steuerventile 16 und 17 befinden. Jedes Steuerventil 16, 17 weist als funktionelle Bauteile einen Ventilkolben 21 auf, der durch eine Schraubenfeder 22 oder ein äquivalentes elastisches Element in Richtung auf die Drehwelle 9 hin beaufschlagt ist, so daß er auf einem Anschlag im Gehäuse 4 aufliegt. Wenn keine Kraft auf die Drehwelle 9 zu deren Verschwenkung einwirkt, wird sie durch die beiden Ventilkolben 21 in einer neutralen Mittellage zentriert. Sobald aber eine die Kraft der Schraubenfeder 22 übersteigende Kraft beim Schaltvorgang die Drehwelle 9 in ihrem Langloch 18 auf eines der beiden Steuerventile 16 oder 17 hin verschwenkt, hebt dadurch der Ventilkolben 21 einen normalerweise von der Schraubenfeder 27 beaufschlagten Schaltkörper 23 des entsprechenden Ventils von seinem Ventilsitz 24 ab, so daß Druckluft über den Anschluß 7 und die Verteilerpassage 25 in den entsprechenden Ventilanschluß 26, durch das Steuerventil 16 oder 17 und über einen Zylinderanschluß 28 weiter in den Arbeitszylinder 14 oder 15 strömen kann. Das gegenüberliegende Steuerventil wird dabei automatisch und über herkömmliche Entlüftersystem entlüftet.

In jedem Fall ist es durch geeignetes Abstimmen der geometrischen Verhältnisse von Schaltgestänge und Kraft der Arbeitszylinder möglich, die Verstärkung der am Schalthebel ausgeübten Schaltkraft um den gewünschten Faktor bis zum Mitnehmerfinger 11 auf der Drehwelle 9 zu erreichen. Das kann durch geeignete Wahl der Längen der Hebelarme erzielt werden. Die gewünschte Proportionalität zwischen der Betätigungskraft am Schalthebel S und der Kraft des Arbeitszylinders 14 bzw. 15 wird durch die geometrische Anordnung von Steuerventilen 16, 17 und Arbeitszylinder 14, 15 zum Getriebehebel 1 erreicht. Bei Betätigung des Schalthebels S wird der entsprechende Arbeitszylinder 14, 15 über das Steuerventil 16, 17 mit der Druckluft beaufschlagt und erzeugt eine das Schalten unterstüztende Kraft am Servohebel 13 als auch eine Kraft, die gegen jene am Getriebehebel 1 wirkt und somit die Drehwelle 9 entgegen dem Verschwenken beim Schalten zurückdrückt, d.h. das entsprechende Steuerventil 16, 17 schließt. Erst wenn sich die Kraft am Schalthebel S und damit am Getriebehebel 1 weiter erhöht - die Drehwelle 9 also nicht zurückgedrückt, sondern gehalten oder sogar weiter im ursprünglichen Schaltsinn verschwenkt wird - bleibt das Steuerventil 16, 17 geöffnet oder wird sogar noch weiter aufgemacht, so daß durch die Unterstützung durch die Arbeitszylinder 14, 15 auch die Ausgangskraft am Mitnehmerfinger 11 auf der Drehwelle 9 gleich bleibt oder sich noch erhöht. Im Zusammenhang mit der prinzipiell frei bestimmbaren Verstärkung aufgrund der Hebelverhältnisse im Schaltgestänge ergibt sich dann in vorteilhafter Weise eine proportional der Betätigungskraft bemessene Verstärkung der Kraft am Mitnehmerfinger.

Allenfalls könnte noch ein weiterer Arbeitszylinder oder ein Arbeitszylinderpaar vorgesehen sein, welche die Schwenkbewegung der Drehwelle 9 unterstützen, falls die Kraft zum Betätigen der Steuerventile 16 und 17 zu groß wird.

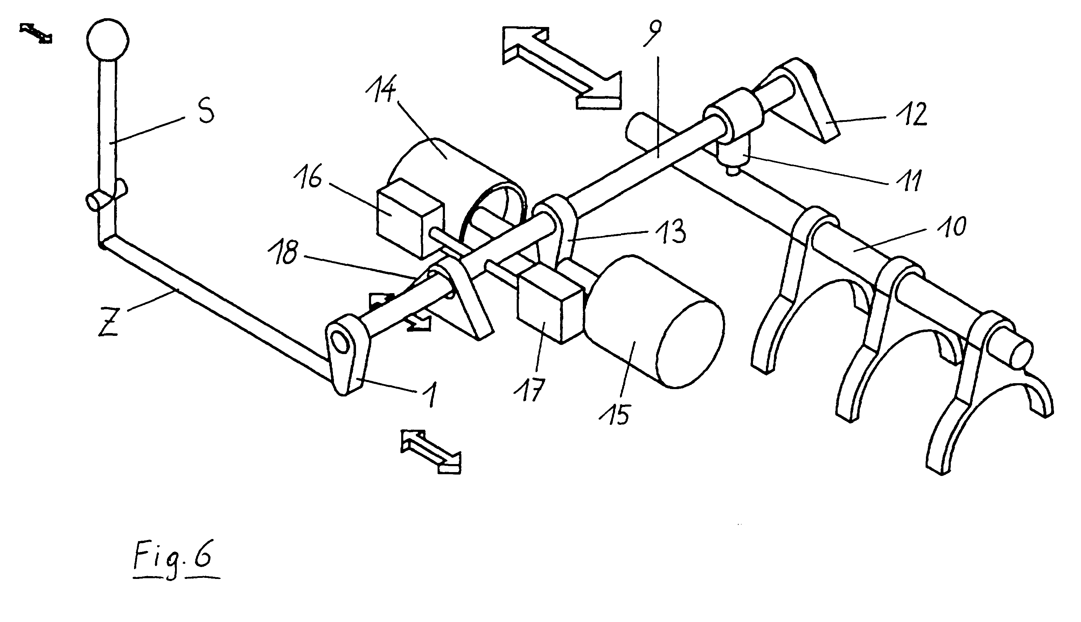

Der innere Aufbau einer weiteren Ausführungsform der erfindungsgemäßen Vorrichtung ist schematisch in Fig. 6 dargestellt. Wieder erfolgt die Anbindung an den Schalthebel S über ein dazwischenliegendes, hier beispielhaft aus nur einem geraden Abschnitt bestehendes Schaltgestänge Z, das am äußeren Getriebehebel 1 angreift. Dieser Getriebehebel 1 verdreht die im wesentlichen quer zur Bewegung des Schalthebels S bei Einlegen der Gänge angeordnete Drehwelle 9 mit dem auf den Träger 10 der Schaltgabeln des Wechselgetriebes einwirkenden Mitnehmerfinger 11. Bei dieser Ausführungsform der Fig. 3 befindet sich das erste Lager 12 zur ortsfesten, aber drehbaren und vorzugsweise auch axial verschiebbaren Lagerung der Drehwelle 9 an dem dem Getriebehebel 1 gegenüberliegenden Ende der Drehwelle 9.

Auf der dem ersten Lager 12 gegenüberliegenden Seite des Mitnehmerfingers 11 ist das zweite Lager 18 für die Drehwelle 9 vorgesehen, in welchem sie in einer Weise gelagert ist, daß sie in Richtung und in der Ebene der Schaltbewegung verschwenkt werden kann. Dies kann beispielsweise durch ein quer zur Drehwelle 9 orientiertes Langloch realisiert sein. Die Arbeitszylinder 14, 15 für die Unterstützung der Schaltbewegung, die Steuerventile 16, 17 zur Ansteuerung der Arbeitszylinder 14, 15 sowie der Servohebel, an welchem die Arbeitszylinder 14, 15 angreifen, sind bei der Ausführungsform der Fig. 3 auf der dem Mitnehmerfinger 11 gegenüberliegenden Seite des festen Lagers 12 und zwischen dem festen Lager 12 sowie dem Lager 18 für die verschwenkbare Lagerung angeordnet.

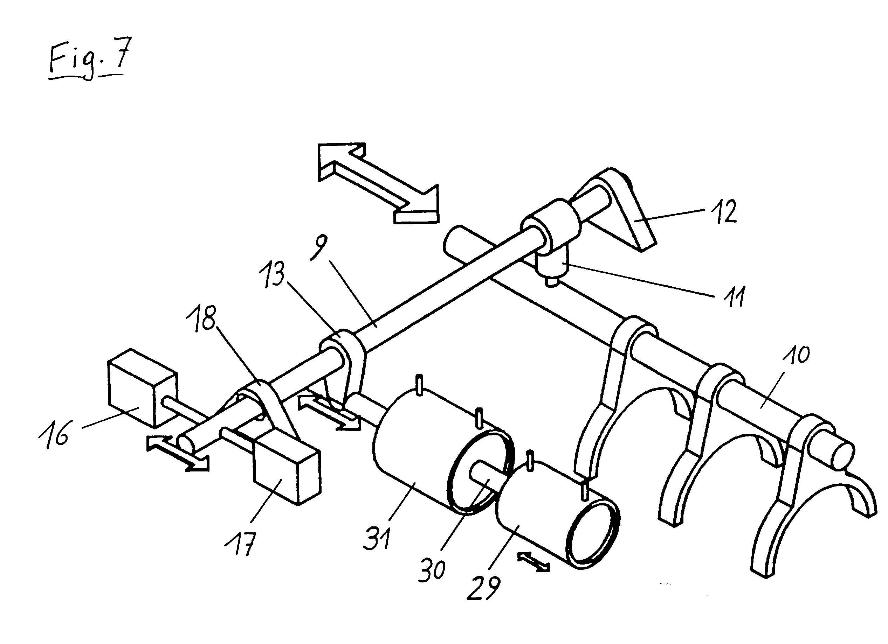

Die Fig. 7 zeigt schematisch eine Ausführungsform zur Verwendung mit einer hydraulischen Übertragung der Schaltbewegung vom Schalthebel S (hier nicht dargestellt) ins Getriebe. Anstelle eines separaten Getriebehebels 1 ist ein Hydraulikzylinder 29 vorgesehen, der über ein herkömmliches hydraulisches Kraftübertragungssystem mit dem Schalthebel in Verbindung steht. Dieser Hydraulikzylinder 29 ist in der dargestellten beispielhaften Ausführungsform über eine Kolbenstange 30 mit dem doppeltwirkenden Arbeitszylinder 31 verbunden, welcher wieder zur Unterstützung der Schaltbewegung auf den Servohebel 13 der Drehwelle 9 einwirkt.

Die zwei zugeordneten Steuerventile 16 und 17 liegen nun beispielhaft auf der dem Servohebel 13 gegenüberliegenden Seite des Lagers 18, in dem die Drehwelle 9 in Schaltrichtung verschwenkbar gelagert ist. Da nun bei dieser Anordnung der Arbeitszylinder 31 bei Ansteuerung durch eines der Steuerventile 16 oder 17 neben der Unterstützung der Drehbewegung der Drehwelle 6 auch deren Verschwenkung noch weiter verstärkt, muß diesem Umstand beispielsweise durch eine entsprechend gegensteuernde Charakteristik der Steuerventile 16 und 17 Rechnung getragen und eine Gegenwirkung erzeugt werden.

Nicht dargestellt ist die vorteilhafte Weiterausbildung des Systems der Fig. 7, wo zur Wahl der Schaltgassen ein weiterer Hydraulikzylinder vorgesehen ist, der in axialer Richtung an der Drehwelle 9 angreift und diese je nach der Schaltgassenwahl-Bewegung des Schalthebels S axial verschiebt.

Bei einer einfachen und wenig aufwendigen Ausführungsform des erfindungsgemäßen Systems kann aber auch ein mechanisches Schaltgestänge anstelle an der Drehwelle mittelbar oder unmittelbar am Kolben zumindest eines der Arbeitszylinder angreifen.

## Patentansprüche

1. Vorrichtung zur Unterstützung der Drehbewegung einer Welle, insbesondere zur Schaltunterstützung für manuelle Getriebe, insbesondere für Zahnradwechselgetriebe von Kraftfahrzeugen, speziell von Nutzfahrzeugen, mit einem manuell zu betätigenden Schalthebel (S), der mittelbar auf die Welle und insbesondere über eine mit zumindest einem Schaltfinger versehene Drehwelle mittelbar auf Schaltgabeln im Wechselgetriebe einwirkt, zumindest einem druckmittelbetätigten Arbeitszylinder (14, 15, 31), der auf das Schaltgestänge unterstützend einwirkt, und zumindest einer Einrichtung zur Ermittlung der Betätigung des Schalthebels, die den Arbeitszylinder ansteuert, dadurch gekennzeichnet, daß die Drehwelle (9) an einer Stelle (12) ortsfest und an einer zweiten Stelle (18) in Richtung der Schaltbewegung beweglich gelagert ist, und daß als Einrichtung zur Ermittlung der Betätigung des Schalthebels zumindest ein schaltbares Steuerventil (16, 17) für den Arbeitszylinder (14, 15, 31) vorgesehen ist, das bei Verschwenkung der Drehwelle (9) durch diese betätigbar ist.

2. Vorrichtung nach Anspruch 1, dadurch gekennzeichnet, daß zwei Steuerventile (14, 15) symmetrisch zur Drehwelle (9) und in einer Linie, parallel und vorzugsweise koaxial mit der Linie der Schwenkbewegung der Drehwelle vorgesehen sind.

3. Vorrichtung nach Anspruch 1 oder 2, dadurch gekennzeichnet, daß die Drehwelle (9) auf der der ortsfesten Lagerung (12) gegenüberliegenden Seite des Mitnehmerfingers (11) in Richtung der Schaltbewegung beweglich gelagert ist.

4. Vorrichtung nach Anspruch 1, 2 oder 3, mit einem im wesentlichen radialen Servohebel, über welchen der Arbeitszylinder auf die Drehwelle einwirkt, und wobei die Drehwelle mittels des Schalthebels auch axial verschiebbar ist, dadurch gekennzeichnet, daß der Servohebel (13) um eine senkrecht zur Achse der Drehwelle (9) verlaufende Achse (19) verschwenkbar ist, während der oder die Arbeitszylinder (14, 15, 31) ortsfest angebracht sind.

5. Vorrichtung nach Anspruche 4, dadurch gekennzeichnet, daß der Servohebel (13) und der oder jeder Arbeitszylinder (14, 15, 31) auf der dem Mitnehmerfinger (11) und der ortsfesten Lagerung (12) gegenüberliegenden Seite der beweglichen Lagerung (18) der Drehwelle (9) angeordnet ist.

6. Vorrichtung nach einem der Ansprüche 1 bis 5, dadurch gekennzeichnet, daß die Steuerventile (16, 17) oder die Arbeitszylinder (14, 15, 31) und ein allfälliger Servohebel (13), vorzugsweise alle genannten Bauteile, zwischen dem Mitnehmerfinger (11) und der beweglichen Lagerung (18) der Drehwelle (9) vorgesehen sind.

7. Vorrichtung einem der Ansprüche 1 bis 6, dadurch gekennzeichnet, daß in an sich bekannter Weise pneumatische Arbeitszylinder (14, 15, 31) vorgesehen sind.

8. Vorrichtung nach Anspruch 7, dadurch gekennzeichnet, daß pneumatische Sitzventile (14, 15) mit geringem Hub zur Ansteuerung des oder jedes Arbeitszylinders (14, 15, 31) vorgesehen sind, welche über ein elastisches Element, vorzugsweise eine Schraubenfeder (27), geschlossen gehalten sind und wobei weitere elastische Elemente, vorzugsweise Schraubenfedern (22), die Drehwelle (9) in ihrer neutralen Stellung halten.

9. Vorrichtung nach einem der Ansprüche 1 bis 8, dadurch gekennzeichnet, daß das oder jedes Steuerventil (16, 17), vorzugsweise auch der oder jeder Arbeitszylinder (14, 15, 31), in einem gemeinsamen Gehäuse (4) angeordnet sind, welches auch das Lager (18) für die in Richtung der Schaltbewegung verschwenkbare Lagerung der Drehwelle (9) beinhaltet und vorzugsweise mit dem auf dem Getriebegehäuse (G) aufgeflanschten Schaltauslegergehäuse (3) verbunden ist.

10. Vorrichtung nach einem der Ansprüche 1 bis 9, dadurch gekennzeichnet, daß ein Schaltzylinder, vorzugsweise ein hydraulischer Arbeitszylinder (29), eines hydraulischen Schaltsystems parallel zu dem oder jedem Arbeitszylinder (14, 15, 31) auf die Drehwelle (9) einwirkt.

11. Vorrichtung nach Anspruch 10, dadurch gekennzeichnet, daß zusätzlich ein weiterer Schaltzylinder, vorzugsweise ein hydraulischer Arbeitszylinder, des hydraulischen Schaltsystems axial auf die Drehwelle (9) einwirkt.

12. Vorrichtung nach Anspruch 10 oder 11, dadurch gekennzeichnet, daß der Schaltzylinder (29) des hydraulischen Schaltsystems mit dem Kolben zumindest eines Arbeitszylinders (31) verbunden ist.

13. Vorrichtung nach einem der Ansprüche 1 bis 12, dadurch gekennzeichnet, daß das mechanische Schaltgestänge (S, Z) am Kolben zumindest eines Arbeitszylinders (14, 15, 31) angreift.
